# EUROPEAN PATENT APPLICATION

(11) **EP 1 202 097 A2**
(43) Date of publication of application: **02.05.2002**
(21) Application number: 01402451.7
(22) Date of filing: 25.09.2001
(51) Int. Cl.: G02B 6/44

(54) **Splittable optical fibewr ribbon and method of manufacture**

(30) Priority: 31.10.2000 US 699422
(71) Applicant: ALCATEL, 75008 Paris (FR)
(72) Inventor: Thompson, Justin, Cornelius, North Carolina 28031 (US)
(74) Representative: Cabinet Hirsch

(57) **Abstract**

A method and apparatus are disclosed by which splittable fiber optic ribbon can be produced in a single-step process greatly reducing the costs and delays involved in manufacturing splittable fiber optic ribbon under current methodologies. The process of making the ribbon includes creating individual groups (2, 2A) of insulated fibers arranged into a flat, side-by-side configuration; aligning the multiple groups of fibers (two or more) simultaneously with a single coating die (6) having multiple exit lands; having the groups of fibers pass through the single coating die creating fiber optic subunits (7, 7A); drawing the subunits through a first curing chamber (8) to partially cure the coating of the subunits, while keeping the subunits close together using a first alignment die(9); bringing the subunits in contact with each other on their sides through a second alignment die (10); and finally presenting the joined subunits to a second curing chamber (11) where the coating is completely cured. Accordingly, the subunit's surfaces will be cross-linked at the locations of contact. The thickness of coating will be thinnest at the location of the cross-link web connection creating a stress concentration location when separating the ribbon unit and, therefore, each subunit can be easily split from the rest of the ribbon unit when desired. It is estimated that this invention will reduce the current manufacturing costs of splittable fiber optic ribbon by approximately 33%.

## Description

### BACKGROUND OF THE INVENTION

### Field of the Invention

The present invention deals with optical fiber ribbons, in particular the method of manufacture of a single fiber optic ribbon from multiple fiber optic ribbons through a single-step process, and yet allowing the single ribbon unit to be easily splittable into smaller fiber optic ribbons.

### Discussion of Related Art

There are many ways to manufacture and configure fiber optic cables. One of the most common forms is the use of fiber optic ribbons. A fiber optic ribbon is created when several individually insulated fibers are aligned side-by-side and then covered with a protective coating. This results in a flat fiber optic ribbon bundle (as opposed to a circular or round fiber optic tube bundle or loose wrapped bundle) which has the optical fibers held in positions parallel to each other in the same plane.

When using the above described fiber optic ribbons, it is common to have the need or desire to physically separate or split individual groupings of the optical fibers from within the ribbon unit from the other fibers within the ribbon unit. For example, if one needs a ribbon of only (12) fibers and a twenty-four (24) fiber ribbon already exists, it would be advantageous to split the extra 12 fibers from the ribbon. This would eliminate waste by allowing the remaining twelve (12) fibers to be used in another application.

However, trying to separate fibers from a ribbon is not without its hazards. Because of the relatively small diameter of the optical fibers, and the narrow space between each fiber, the process of separation can damage the fibers or their protective coatings. This can occur when either trying to pull the fibers apart or using a sharp edge to try and cut the fibers from the main ribbon.

In efforts to prevent the problems associated with trying to separate optical fibers from ribbons there have been several alternative methods developed for manufacturing a fiber optic ribbon that is conducive to being split. For example, U.S. Patent No. 4,368,214 to Gillette discloses a method that utilizes a cloud of electrostatically charged particles of a fusible dielectric material to coat lengths of conductors that are held at a potential opposite that of the particles. Also, U.S. Patent No. 5,442,722 to DeCarlo discloses a fiber optic ribbon with a "zip cord" placed between certain fibers in order to effect splitting of the ribbon when the zip cord is pulled. A final method is that described in U.S. Patent No. 5,982,968 to Stuplin where stress concentrations are formed directly in the resin matrix of the ribbon holding the optical fibers together, so the fibers can be easily separated from each other at the locations of the stress concentrations.

There are a number of major problems with the various methods of manufacturing splittable fiber optic ribbons under the methods described above. The biggest problems are the time and costs expended in the production of splittable ribbons. In the methods presently used there is a great deal of expense incurred in the use of multi-step processes to produce the splittable ribbon, and due to the problem of lengthy "change-over" periods.

Current multi-step processes incorporate two main steps, which increases the length of time and costs involved in making splittable ribbons. The first step is the making of the ribbon subunits. These subunits are made by coating a plurality of optical fibers with a matrix resin and then completely curing the matrix resin. The second step is to then group a plurality of these completely cured subunits, such that they are arranged closely to each other in a side-by-side configuration, and then applying a second coating of matrix resin to the plurality of subunits and completely curing this second coating to adhere the plurality of subunits together making a single ribbon unit. This process requires two complete coating steps and two complete curing steps, thus increasing costs and time involved in the production of ribbons.

The "change-over" problem occurs when there is substantial time invested in changing production line components for different ribbon types that are required. For example, a production line may be used to produce both the subunit ribbons and the splittable ribbon that contains these subunits. The production line will then require changing of components such as dies, guide sheaves, alignment tooling, as well as changing of set points such as line speed, lamp power, winding pitch, etc. This change over process consumes valuable time, which otherwise could have been spent in actual manufacturing.

### SUMMARY OF THE INVENTION

The object of this invention is to manufacture splittable optical fiber ribbons in a single-step process at a cost much lower than current manufacturing methods, but yet provide all of the advantages of having a fiber optic ribbon which can be split easily, without damaging the optical fibers.

Thus, the present invention is directed to the method of using a single-step process to manufacture a splittable fiber optic ribbon. The process of making the ribbon includes creating individual groups of insulated fibers arranged into a flat, side-by-side configuration; aligning the multiple groups of fibers (two or more) simultaneously with a single coating die having multiple exit lands; having the groups of fibers pass through the single coating die creating fiber optic subunits; drawing the subunits through a first chamber to partially cure the coating of the subunits, while keeping the subunits close together using a first alignment die; bringing the subunits in contact with each other on their sides through a second alignment die; and finally presenting the joined subunits to a second curing chamber where the coating is completely cured. Accordingly, the subunits will be lightly cross-linked at the locations of contact and each subunit can be easily split from the rest of the ribbon unit when desired. Because of the partial curing before the subunits are joined, the location of the cross-link web will be thinner than the remainder of the subunits, therefore, creating a location of stress concentration allowing the ribbon to be easily pulled apart. This stress location will allow the ribbon unit to be divided easily and in a proper location without the risk of damaging the optical fibers or their coating. The difference between this method of generating the desired stress concentration and that described in U.S. Patent No. 5,982,968 to Stulpin is that in the current method the ribbon subunits are partially cured before making contact with one another. This allows the physical and chemical structure of the individual subunit to be formed separately so that upon fracture (splitting) at the stress concentration point the damage to the subunit ribbon, caused by this fracture (splitting) is minimized. The manufacturing method described in U.S. Patent No. 5,982,968 does produce a very similar ribbon in appearance (see Figure 4B). However, in Stulpin the physical and chemical structure of the subunit ribbons is "locked-in" by cross linking at the same time as the subunits are bonded to one another, because the ribbon coating is cured in a single step, thus resulting in a deeper and stronger cross linking bond between the subunits and a greater potential for the fracture (splitting) of subunits to spread into the individual subunit ribbons. This results in many of the problems previously discussed which occur when attempting to fracture (split) ribbon subunits from the main ribbon unit. In ribbons produced according to the present invention, the cross linking that occurs between the coating of one ribbon subunit and the other, will only be on or near the surface and will not extend to an appreciable depth within the subunit ribbons geometry. This is because the subunits in the present invention have separate individual structures (unlike in Stulpin) which are bonded only at their surface. This is due to the step of partially curing the subunits, to form their basic geometry, before joining them together.

As shown above, the present invention would avoid the problem of a second step to apply a secondary coating of ribbon matrix to bond multiple ribbon subunits together. Avoidance of this step would greatly reduce the cost and time expense normally associated with the manufacture of splittable fiber optic ribbons. Such reduction in cost could be as great as one third over the present methods of manufacturing such splittable fiber optic ribbon.

### BRIEF DESCRIPTION OF THE DRAWINGS

The advantages, nature and various additional features of the invention will appear more fully upon consideration of the illustrative embodiment of the invention which is schematically set forth in the drawings, in which:
Figure 1 is a cross-sectional view of a single fiber optic subunit.
Figure 2 is a diagrammatical representation of the manufacturing system for production of splittable fiber optic ribbon, embodying the present method and apparatus of the invention.
Figure 3 is a cross-sectional view of multiple fiber optic subunits slightly apart, prior to final cure.
Figure 4A is a cross-sectional view of a complete splittable fiber optic ribbon unit produced utilizing the method and apparatus shown in Figure 2.
Figure 4B is a close-up view of the cross-link web location between two subunits after they have been brought in contact with each other.
Figure 5 is a fragmentary plan view of a complete splittable fiber optic ribbon unit produced utilizing the method and apparatus shown in Figure 2, depicting a splitting of the ribbon, at the location of the cross-link web.

### DETAILED DESCRIPTION OF THE INVENTION

The present invention will be explained in further detail by making reference to the accompanying drawings, which do not limit the scope of the invention in any way.

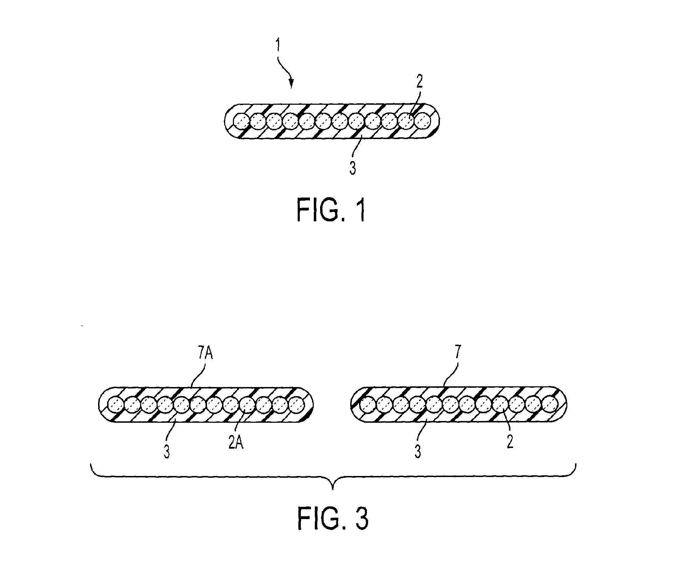

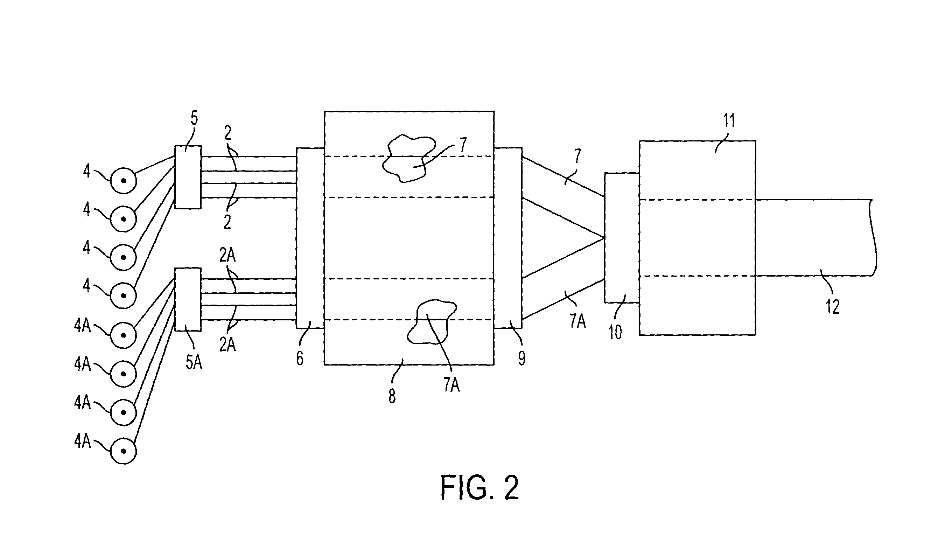

Referring to the drawings, Figure 1 shows a typical fiber optic ribbon subunit 1 with twelve (12) optical fibers 2, surrounded by a typical fiber optic coating or ribbon matrix resin 3. The present invention can be used with any type of optical fiber and coating or matrix resin and is not limited to particular types or diameters. For example, a matrix material which is cured through exposure to ultraviolet light may be used as coating for the subunits. In the preferred embodiment, the subunit coating material 3 would be of the type such that an oxygen rich curing environment would inhibit polymerization on the surface of the newly made subunits. Any commercially available UV-curable acrylate is a good example of such a material. Additionally, Figure 1 only shows twelve (12) optical fibers 2 where as this invention can be used with any number of optical fibers within a ribbon, and is not limited to twelve (12).

Turning now in detail to Figure 2 of the drawings, therein illustrated is a depiction of the system employed to manufacture a splittable ribbon as defined by this invention. The main elements of the system depicted in Figure 2 include: the optical fiber spools 4, 4A; the optical fibers 2, 2A; a positioning apparatus 5, 5A; a single coating die 6; a first curing chamber 8; a first alignment die 9; a second alignment die 10; and a second curing chamber 11.

In this invention a plurality of optical fibers 2, 2A are drawn from spools 4, 4A continuously. (Only two (2) banks of four (4) spools 4, 4A are shown for simplicity, actual number will vary with the number of subunits in a ribbon and number of optical fibers within a subunit.) In one embodiment of the present invention, the optical fibers 2, 2A from the spools 4, 4A are passed through a positioning apparatus 5, 5A, where the respective optical fibers 2, 2A for each subunit 7, 7A are placed in a parallel and planar relationship with other optical fibers 2, 2A to be placed in the same subunit 7, 7A at a distance required for the particular subunit design that is being manufactured. After the plurality of the optical fibers 2, 2A have been aligned through the positioning apparatus 5, 5A, or come directly from the spools 4, 4A, they enter a single coating die 6. The single coating die 6 has multiple exit lands so as to allow the coating of multiple ribbon subunits 7, 7A simultaneously. Specifically, ribbon matrix resin 3 is applied to each grouping of optical fibers 2, 2A to produce subunits 7, 7A. Any acceptable or commonly used fiber optic coating or ribbon matrix resin may be used when coating the subunits 7, 7A. Examples include any commercially available UV-curable acrylate with the desired material properties. Additionally, single coating die 6 is to be manufactured to ensure proper exterior dimensions for the subunits 7, 7A after coating. As these dimensions will vary in any application, they are not important to the present invention.

After the subunits 7, 7A exit the single coating die 6 they pass through a first curing chamber 8, in which the fiber optic coating or ribbon matrix resin 3 is partially cured. Any conventional curing process can be chosen. An example of a commonly used curing process would be the use of ultraviolet light to partially cure the subunit coating. The curing process must be chosen in accordance with that which is required to facilitate polymerization of the ribbon matrix or resin material chosen. In the preferred embodiment, the environment within the first curing chamber is oxygen rich so that the oxygen inhibits polymerization on the surface of the newly made subunits 7, 7A. An oxygen content equal to, or possibly greater than, that of normal atmosphere will reduce the degree of photoinitiation on the materials surface because the oxygen is a reaction inhibitor. The exact oxygen content necessary to achieve the appropriate cure at depth while sufficiently inhibiting the cure at the surface will depend on the specific materials chosen as the ribbon coating matrix or resin. Additionally, the preferred embodiment also includes a first alignment die 9 through which the partially cured subunits 7, 7A pass. The first alignment die 9 is to be manufactured such that a small distance will be maintained between the subunits 7,7A as they pass through the first curing chamber 8, and the first alignment die 9 will ensure that the subunits maintain a parallel and planar relationship. This is represented in Figure 3, depicting the subunits 7, 7A at a small distance from each other in a parallel and planar relationship.

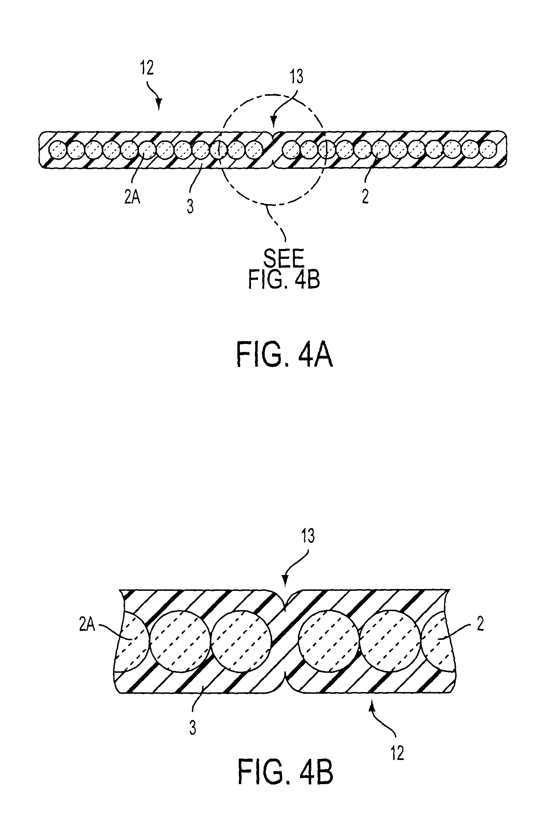

After the partially cured subunits 7, 7A pass through the first curing chamber 8, and the first alignment die 9, the subunits 7, 7A enter a second alignment die 10 which is manufactured and designed to force the plurality of subunits 7, 7A to contact each other as shown in Figure 4, creating a cross-link connection or web between the ribbon matrix resin 3 of each subunit 7, 7A as the subunit coating's surfaces cure, thus creating the ribbon unit 12. As shown in Figures 4A and 4B, in the preferred embodiment, the second alignment die 10 forces the subunits 7, 7A together such that the fiber optic coating or ribbon matrix resin 3 at the cross-link connection or web will be narrower than that of the main portion of the subunits 7, 7A creating a cross-link web 13. After the plurality of the subunits 7, 7A pass through the second alignment die 10 creating the ribbon unit 12, the ribbon unit 12 enter a second curing chamber 11, in which the fiber optic coating or ribbon matrix resin 3 is completely cured. The curing chamber 11 is to be designed to complete the proper curing of the fiber optic coating or ribbon matrix resin 3, as required by the coating or resin 3 type chosen. In the preferred embodiment, the oxygen content in the second curing chamber 11 should be minimized to allow the reactive fiber optic coating or ribbon matrix resin 3 to cure completely. If a material is chosen as the ribbon coating or resin, where polymerization occurs by some means other than by exposure to appropriate wavelength radiation, it may be necessary to use an inhibitor other than oxygen. If this is the case, the use of an appropriate inhibitor should be considered within the scope of this invention. Again, as in the first curing chamber 6, the method of cure in the second curing chamber 11 can be any commonly used curing process which is needed for the particular fiber optic coating or ribbon matrix resin 3 chosen. Again, for example, a curing process employing ultraviolet light may be used to complete the curing process.

After the above process is completed, the fiber optic coating or ribbon matrix resin 3 is cured over the entire ribbon unit 12, including the cross-link web(s) 13 located in each ribbon unit 12 between the plurality of subunits 7, 7A.

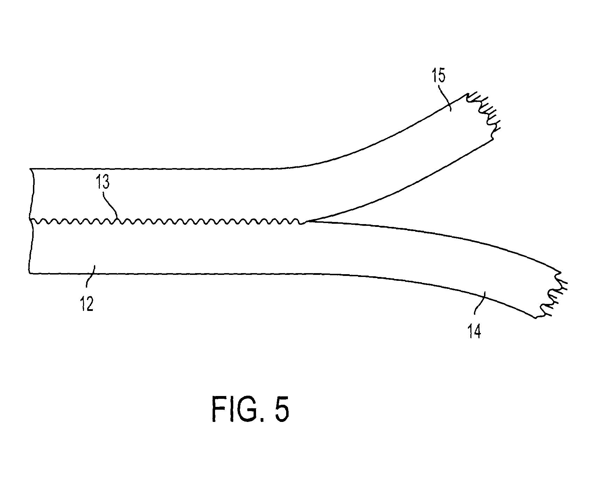

In the preferred embodiment, when the ribbon unit 12 is desired to be separated into a plurality of subunits (represented by 14 and 15 in Figure 5) the cross-link web 13 creates a location of stress concentration providing a suitable separation point between the newly created subunits 14, 15, therefore, avoiding damage to the optical fibers 2, 2A located within the subunits 14, 15, and ensuring that adequate fiber optic coating or ribbon matrix resin 3 remains for proper protection of the optical fibers 2, 2A.

Thus, it can be seen that the present invention provides a novel method and apparatus by which to manufacture an easily splittable optical fiber in a single-step process, where the invention includes arranging individual groups of insulated optical fibers into a flat, side-by-side configuration; having multiple groups of optical fibers (two or more) pass through a single coating die having multiple exit lands, producing subunits; having the subunits pass through a first chamber to partially cure the coating of the subunits, while keeping the subunits close together using a first alignment die; bringing the subunits in contact with each other on their sides through a second alignment die; and finally presenting the joined subunits to a second curing chamber where the coating is completely cured. Thus, the subunit's surfaces will be cross-linked at the locations of contact and each subunit can be easily split from the rest of the ribbon unit when desired. Because of the partial curing before the subunits are joined, the location of the cross-link web will be thinner than the remainder of the subunits, therefore, creating a location of stress concentration allowing the ribbon unit to be pulled apart. This stress concentration location will allow the ribbon unit to be divided easily in a proper location without the risk of damaging the fibers or their coating.

It is of course understood that departures can be made from the preferred embodiments of the invention by those of ordinary skill in the art without departing from the spirit and scope of the invention that is limited only by the following claims.

## Claims

1. A method of manufacturing fiber-optic ribbon cable, said method comprising the steps of:
- arranging a plurality of optical fibers (2, 2A) into a plurality of groups, wherein the optical fibers within each group are in a parallel and planar relationship with respect to each other;
- individually applying a coating to the plurality of said groups creating a plurality of subunits (7, 7A);
- partially curing (8) said coating while maintaining (9) a relatively small distance between the subunits;
- forcing (10) said subunits to contact each other at an edge portion of each subunit creating a single unit;
- completely curing (11) said coating.

2. A method as described in Claim 1 wherein said partial curing step (8) comprises curing said plurality of individual subunits in an oxygen-rich environment.

3. A method as described in Claim 1 or 2, wherein said complete curing step (11) comprises curing said single unit in an environment where the oxygen content is minimized.

4. A method as described in Claim 1, 2 or 3, wherein said coating step comprises passing said individual subunits through a single coating die (6).

5. A method as described in one of Claims 1 to 4, wherein said partial curing step comprises a first alignment die (9) for maintaining said relatively small distance between said subunits (7, 7A).

6. A method as described in one of Claims 1 to 5, wherein said forcing step comprises a second alignment die (10) to force said subunits to touch prior to completely curing said coating.
